# EUROPEAN PATENT APPLICATION

(11) **EP 4 563 625 A1**
(43) Date of publication of application: **04.06.2025**
(21) Application number: 23213672.1
(22) Date of filing: 01.12.2023
(51) Int. Cl.: C08J 5/04, C08J 5/24, C08J 5/08

(54) **RECYCLABLE STYRENE MALEIC ANHYDRIDE AND/OR AT LEAST PARTIALLY IMIDIZED STYRENE MALEIC ANHYDRIDE BASED COMPOSITE MATERIAL BY INFUSION METHOD**

(71) Applicant: Trinseo Europe GmbH, 8808 Pfaeffikon (CH)
(72) Inventor: BARAN, Ismet, 8808 Pfäffikon (CH); MERTENS, Chiel, 8808 Pfäffikon (CH); BOUQUET, Gilbert, 8808 Pfäffikon (CH)
(74) Representative: Hoffmann Eitle

(57) **Abstract**

The present disclosure relates to a fibre composite material, a method of preparing a fibre composite material, a method of recycling a fibre composite material, a method of processing a fibre composite material, and a use of a fibre composite material. Said fibre composite material comprises
- a styrene-maleic anhydride copolymer (SMA) and/or at least partially imidized SMA copolymer (SMI), and
-fibre material,
wherein the fibre composite material is obtainable by a liquid composite moulding technique, comprising the steps of:
(a) dissolving SMA and/or SMI in styrene, optionally in the presence of maleic anhydride, to obtain a liquid resin comprising SMA and/or SMI,
(b) transferring the liquid resin comprising SMA and/or SMI into a mould containing the fibre material, and
(c) curing the liquid resin to obtain the fibre composite material.

## Description

### Technical field

The present invention relates to a fibre composite material, a method of preparing a fibre composite material, a method of recycling a fibre composite material, a method of processing a fibre composite material, and a use of a fibre composite material.

### Background art

Fibre-reinforced polymers or plastics typically have a high strength-to-weight ratio compared to the pristine polymer making them useful composites for structural applications. Typically, fibre-reinforced composites are prepared from thermoset polymers which have a high glass transition temperature (Tg) resulting in a high temperature resistance and strong mechanical properties. However, such systems are not recyclable due to the high level of crosslinking in a thermoset polymer. For instance, epoxy-based fibre-reinforced composites are known to have strong mechanical properties but they are not recyclable.

Fibre-reinforced composites based on thermoplastic polymers on the other hand can be recyclable, however, they typically have a lower thermomechanical stability and have weaker mechanical strength making them unsuitable for load bearing applications.

For instance, EP 2 985 135 relates to a fibre composite material comprising glass fibres and an acrylic matrix. However, this material substantially comprises an acrylic resin having a low Tg of ca 100 °C making it unsuitable for applications near, or higher than 100 °C. Moreover, the low boiling point of an acrylic based solution of ca 100 °C limits the production cycle time. In addition, pMMA acrylic resins are moisture sensitive further limiting their applicability.

### Problem to be solved

The present invention is therefore directed towards a fibre composite material which has high thermomechanical resistance and strong mechanical properties which is simultaneously recyclable.

### Summary of the invention

The present invention solves the problems of the prior art by the following means.

In a first aspect, the present invention relates to a fibre composite material comprising
- a styrene-maleic anhydride copolymer (SMA) and/or at least partially imidized SMA copolymer (SMI), and
- fibre material,
wherein the fibre composite material is obtainable by a liquid composite moulding technique, comprising the steps of:
(a) dissolving SMA and/or SMI in styrene, optionally in the presence of maleic anhydride, to obtain a liquid resin comprising SMA and/or SMI,
(b) transferring the liquid resin comprising SMA and/or SMI into a mould containing the fibre material, and
(c) curing the liquid resin to obtain the fibre composite material.

In a second aspect, the present invention relates to a method for preparing a fibre composite material, said fibre composite material comprising
- a styrene-maleic anhydride copolymer (SMA) and/or at least partially imidized SMA copolymer (SMI), and
- fibre material,
the method comprising a liquid composite moulding technique, comprising the steps of:
(a) dissolving SMA and/or SMI in styrene, optionally in the presence of maleic anhydride, to obtain a liquid resin comprising SMA and/or SMI,
(b) transferring the liquid resin comprising SMA and/or SMI into a mould containing the fibre material, and
(c) curing the liquid resin to obtain the fibre composite material.

In a third aspect, the present invention relates to a method of recycling the fibre composite material according to the first aspect, the method comprising the steps of
(i) contacting the fibre composite material with a solvent selected from any of acetone, methyl ethyl ketone, tetrahydrofuran, cyclohexanone, dimethylformamide (DMF), dimethylsulfoxide (DMSO), N-methyl pyrrolidone (NMP), dichloromethane (DCM), chloroform, toluene, ethyl benzene, ethyl acetate, or combinations thereof,
(ii) filtering out the fibre material, and
(iii) drying the filtrate to recover dissolved SMA and/or SMI and/or polystyrene.

In a fourth aspect, the present invention relates to a method of processing the fibre composite material according to the first aspect, wherein the processing includes any of stamp forming, thermoforming, compression moulding, vacuum assisted moulding, press consolidation, automated fibre and tape placement, automated fibre and tape winding, autoclave consolidation, and/or layering to form a laminate.

In fifth aspect, the present invention relates to a use of the fibre composite material according to the first aspect in an article, preferably said article being any of electronics equipment, aerospace materials, wind turbines, casings, marine structures, pipe and tank, construction structures, transportation, defence materials, consumer goods, circuit boards, battery casings, pressurized tanks, and/or structural profiles used in construction industry.

### Brief description of the drawings

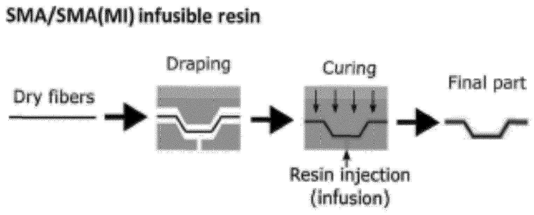

Figure 1 depicts a schematic for preparing a fibre composite material according to one embodiment of the present invention.

### Detailed description of the invention

### Fibre composite material

In a first aspect, the present invention relates to a fibre composite material comprising
- a styrene-maleic anhydride copolymer (SMA) and/or at least partially imidized SMA copolymer (SMI), and
- fibre material,
wherein the fibre composite material is obtainable by a liquid composite moulding technique, comprising the steps of:
(a) dissolving SMA and/or SMI in styrene, optionally in the presence of maleic anhydride, to obtain a liquid resin comprising SMA and/or SMI,
(b) transferring the liquid resin comprising SMA and/or SMI into a mould containing the fibre material, and
(c) curing the liquid resin to obtain the fibre composite material.

The term "copolymer" as used herein has its customary meaning as used in the art. The following description is merely for illustrative purposes. Copolymer chains comprise units of at least two comonomers. The term "monomer" as used herein describes a molecule of a first type that is able to undergo polymerisation with other molecules. Said other molecules may be other molecules of the first type, molecules of a second type and optionally further types, or molecules of the first, second and optionally further types. Having undergone polymerization and being incorporated into the polymer chain, the term "unit of monomer" refers to the chemical unit in the polymer which corresponds to the previous monomer. The units of monomers may also be described as "repeating units".

If molecules of the first type only undergo polymerization with other molecules of the first type, then only one monomer is present, which may also be referred to as a homomonomer. Homomonomers polymerise to form homopolymers consisting of units of homomonomers. The broader term "monomer" includes homomonomers. For instance, a monomer being a molecule "A" may polymerise to form a polymer " [...]-A-A-A-A-[...] ", which in turn consists of units of monomers "-A-". For instance, ethylene molecules (=monomers) may polymerise to form polyethylene (=polymer), which in turn consists of ethylene units (=units of monomer).

If the molecules of the first type undergo polymerisation with molecules of the second type and optionally further types, then the molecules of the first, second and optionally further types are comonomers respectively. Comonomers polymerise to form copolymers consisting of units of comonomers. The broader term "monomer" includes comonomers. For instance, a comonomer being a molecule "A" may polymerise with a comonomer being a molecule "B" to form a copolymer " [...] -A-B-A-A- [...] ", which in turn consists of units of comonomers "-A-" and "-B-".

If the molecules of the first type (comonomers "A") only polymerise with molecules of the second type (comonomers "B") and optionally other molecules "A", then two comonomers are present and a binary copolymer is formed. If the molecules of the first type (comonomers "A") polymerise with molecules of a second type (comonomers "B") and molecules of a further type (comonomers "C") and optionally other molecules "A", then three comonomers are present and a ternary copolymer (=terpolymer) is formed.

The term "copolymer" includes any type of sequence of units of comonomers in the polymer chains, such as random copolymers with a random sequence (e.g. "[...]-A-B-A-A-A-B-[...]"), block copolymers with blocks of identical sequences (e.g. "[...]-A-A-A-[...]-B-B-B-[...]"), and repeating copolymers with a repeating/alternating sequence (e.g. "[...]-A-B-A-B-[...]").

In accordance with the above definitions, styrene-maleic anhydride (SMA) is a binary copolymer formed from comonomers styrene and maleic anhydride respectively, and comprising units of styrene and maleic anhydride comonomers, respectively.

The term "at least partially imidized SMA copolymer" (SMI) describes a copolymer based on SMA, wherein at least a portion of the units of maleic anhydride comonomers are imidized to be units of maleic imide comonomers, wherein the imidic N-atom may have an H attached to it or be preferably further functionalised with a phenyl or other organic group. As such, the term includes pure SMI copolymer which is a binary copolymer comprising units of styrene and maleic imide comonomers respectively, as well as ternary copolymers comprising units of styrene, maleic imide, and maleic anhydride comonomers respectively. For instance, in embodiments the ratio of units of maleic imide comonomers to units of maleic anhydride monomers may be from 1:99 to 100:0. In some embodiments, the ratio of units of maleic imide comonomers to units of maleic anhydride monomers may be from 5:95 to 20:80, from 20:80 to 35:65, 50:50, from 65:35 to 80:20, from 80:20 to 95:5, and/or any permutation thereof.

The term "fibre material" as used herein, refers to a material substantially consisting of fibres, preferably consisting of fibres. A fibre is a material form characterised by a length and a diameter, wherein said form has a very high aspect ratio of length to diameter. Typically, fibres are flexible along their length dimension but substantially less flexible, preferably inflexible, around their diameter. The term "fibre" may be used synonymously with the term "filament".

The fibre composite material according to the present invention is thus obtainable by a liquid composite moulding technique, comprising the steps of:
(a) dissolving SMA and/or SMI in styrene, optionally in the presence of maleic anhydride, to obtain a liquid resin comprising SMA and/or SMI,
(b) transferring the liquid resin comprising SMA and/or SMI into a mould containing the fibre material, and
(c) curing the liquid resin to obtain the fibre composite material.

In step (a) SMA and/or SMI is dissolved in styrene, optionally in the presence of maleic anhydride, to obtain a liquid resin comprising SMA and/or SMI. The liquid resin comprising SMA and/or SMI may also simply be referred to as "the liquid resin". The styrene is thus used as a solvent to dissolve the SMA and/or SMI. In this context, the SMA and/or SMI may herein also be referred to as the "Polymer 1". Said Polymer 1 may be one polymer or a mixture of polymers. Since the styrene is curable, it may also be referred to as a "curable solvent" or a "reactive solvent". Optionally, the reactive solvent also comprises maleic anhydride.

In step (b), the liquid resin comprising SMA and/or SMI is transferred into a mould containing the fibre material. This can be accomplished using different manufacturing techniques, including vacuum infusion where the liquid resin is transferred into the mould using vacuum pressure, or via resin transfer moulding (RTM) technique where higher than atmospheric pressures are used for the transfer. Preferably, the fibre material being in the mould prior to the resin transfer step is dry. During said transfer step, the liquid resin comprising SMA and/or SMI impregnates the fibre material. Typically, the step (b) further comprises a step of adding a curing agent.

In step (c), the liquid resin comprising SMA and/or SMI is cured to obtain the fibre composite material. During the curing, the reactive solvent polymerises to form a polymer. This polymer may herein be referred as "Polymer 2". Said Polymer 2 may be one polymer or a mixture of polymers. The fibre composite material thus comprises at least two types of polymers, namely Polymer 1 and Polymer 2. Since Polymer 1 is dissolved in step (a) and reprecipitates in step (c), the molecular weight of Polymer 1 does not change during the preparation of fibre composite material. If the reactive solvent is styrene, then the fibre composite material comprises SMA and/or SMI as Polymer 1, and polystyrene as Polymer 2. If the reactive solvent is styrene and maleic anhydride and/or partially imidized maleic anhydride, then the fibre composite material comprises SMA and/or SMI as Polymer 1, and polystyrene and SMA and/or SMI as Polymer 2. The curing of step (c) may be carried out at 50 °C or more, or at room temperature in combination with a suitable accelerator.

In one embodiment, the step (c) further includes a step of consolidating the fibre composite material, said consolidation comprising a further manufacturing processing step, selected from any of stamp forming, thermoforming, compression moulding, vacuum assisted moulding, press consolidation, automated fibre and tape placement, automated fibre and tape winding, autoclave consolidation, 3D printing, and/or layering to form a laminate.

Without wishing to be bound by theory, the present inventors submit that through said infusion technique a favourable adhesion between the SMA and/or SMI, and the fibre material can be achieved, resulting in a fibre composite material with high thermomechanical resistance and strong mechanical performance which is simultaneously recyclable. SMA and/or SMI materials and fibre-reinforced composites materials thereof have an improved rigidity, heat resistance, and dimensional stability compared to fibre-reinforced crystalline materials such as polypropylene due to the high thermomechanical resistance of SMA and/or SMI. These qualities afford SMA and/or SMI fibre composite materials better warpage, high fluidity and aging resistance. Similarly, polystyrene has a high thermomechanical resistance making styrene a suitable reactive solvent.

Moreover, said infusion technique achieves a favourable and consistent mixing between the SMA and/or SMI and the fibre material which affords the material a strong thermomechanical resistance and strong mechanical performance. The favourable mixing may be achieved through controlling the viscosity of the liquid resin comprising SMA and/or SMI, said viscosity leading to a good impregnation of the continuous fibre material during the resin transfer in step (b). The present inventors submit in the infusion process the liquid resin can efficiently impregnate the continuous fibres because it can move into inter-fibre space. In addition, the liquid resin comprising SMA and/or SMI has a high boiling point of around 145 °C, which enables fast production time cycles at elevated temperature due to the higher reactivity and curing rates. The fibre composite materials can therefore be produced efficiently and cost effectively.

Moreover, since the obtained fibre composite material comprises SMA and/or SMI and/or polystyrene it is believed to have a high moisture resistance.

Moreover, since the obtained fibre composite material comprises SMA and/or SMI and/or polystyrene, it is recyclable by contacting the fibre composite material with a solvent, filtering out the fibre material and drying the filtrate to recover, the SMA and/or SMI, polystyrene, and the fibre material.

In a preferred embodiment according to the first aspect of the present invention, the fibre material is a continuous and/or discontinuous fibre material, and the fibre material is any of a glass fibre material, carbon fibre material, aramid fibre material, basalt fibre material and/or natural fibre material in the form fabrics, such as non-woven, woven, unidirectional, continuous filament mat, chopped strand mat, and direct rovings.

The term "continuous" as used herein, characterises a fibre with a very high length-to-diameter aspect ratio. In one embodiment, the aspect ratio is at least 10,000, preferably at least 25,000, more preferably at least 50,000, and even more preferably at least 100,000. In one embodiment, the diameter of a continuous fibre in the continuous fibre material is between 1-200 µm. Preferably, the length of a continuous fibre in the continuous fibre material is at least 10 mm. Likewise, the term "discontinuous" as used herein, characterises a fibre with a lower length-to-diameter aspect ratio than a "continuous" fibre. In one embodiment, the aspect ratio is less than 2,000, preferably less than 1,000, and more preferably less than 500. In one embodiment, the diameter of a discontinuous fibre is between 1-200 µm. In one embodiment, the length of a discontinuous fibre is less than 3 mm, preferably less than 1 mm, and even more preferably less than 0.5 mm.

Preferably, the fibre material is a continuous fibre material. Preferably in said continuous fibre material, the length of a continuous fibre in the continuous fibre material is at least 20 mm, more preferably at least 30 mm, and even more preferably at least 40 mm. In a particularly preferred embodiment, in said fibre material the length of a continuous fibre in the continuous fibre material is 40-60 mm.

Without wishing to be bound by theory, the present inventors submit that fibre composite materials according to the present invention with continuous fibre material have even stronger mechanical properties making them more suitable for load-bearing structural applications. Moreover, the present inventors submit that through the infusion preparation process consistent mixing between continuous fibres and the polymer can be achieved since the liquid resin can efficiently impregnate the continuous fibres and move into inter-fibre space.

Preferably the fibre material is a glass fibre material and even more preferably a continuous glass fibre material.

Without wishing to be bound by theory, the present inventors submit that fibre composite materials according to the present invention with continuous glass fibres have particularly strong mechanical properties which are suitable for load-bearing structures.

In a preferred embodiment according to the first aspect of the present application, the fibre composite material comprises at least 20 wt% fibre material relative to the total weight of the composite, preferably at least 40 wt%, and even more preferably at least 55 wt%; and at most 99 wt% fibre material relative to the total weight of the composite.

Preferably, the fibre composite material substantially consists of the SMA and/or SMI and/or polystyrene, and the fibre material. In a preferred embodiment, the SMA and/or SMI and/or polystyrene and the fibre material comprise at least 60 wt% relative to the total weight of the composite, preferably at least 70 wt%, more preferably at least 80 wt%, and even more preferably at least 90 wt%.

Without wishing to be bound by theory, the present inventors submit that within the above-described content ranges of fibre material, and SMA and/or SMI and/or polystyrene and fibre material respectively, relative to the total mass of the composite, the thermomechanical and mechanical properties of the fibre composite material are particularly favourable due to the favourable ratio of binding SMA and/or SMI and/or polystyrene and strengthening fibre material.

Preferably, the fibre composite material has a flexural strength (FS)of at least 200 MPa, more preferably at least 300 MPa, more preferably at least 400 MPa, more preferably at least 500 MPa, more preferably at least 600 MPa, more preferably at least 700 MPa, and even more preferably at least 800 MPa. The flexural strength is measured according to ISO 14125.

Preferably, the fibre composite material has a flexural modulus of at least 15 GPa, more preferably at least 16 GPa, more preferably at least 17 GPa, more preferably at least 18 GPa, more preferably at least 19 GPa, more preferably at least 20 GPa, more preferably at least 21 GPa, more preferably at least 22 GPa, more preferably at least 23 GPa, more preferably at least 24 GPa, more preferably at least 25 GPa, and even more preferably at least 26 GPa. The flexural modulus is measured according to ISO 14125.

Preferably, the fibre composite material has flexural strain at failure of at least 2%, more preferably at least 2.5%, and even more preferably at least 3%. The flexural strain at failure is measured according to ISO 14125.

In a preferred embodiment according to the first aspect of the present invention, the fibre composite material further comprises an additive selected from any of a flame retardant additive, a UV stabiliser, a filler, an antioxidant, a mould release agent, a pigment, or any combination thereof.

Preferably, said additive is contained in amount of at most 40 wt% relative to the total weight of the fibre composite material, preferably at most 30 wt%, more preferably at most 20 wt%, and even more preferably at most 10 wt%. A preferred flame retardant additive is aluminium trihydrate (ATH).

In a preferred embodiment according to the first aspect of the present invention, the fibre composite material is recyclable, optionally wherein at least 60 wt% of the material are recoverable according to the method for recycling disclosed in the description, preferably at least 70 wt%, more preferably at least 80 wt%, more preferably at least 90 wt%, and even more preferably at least 95 wt%.

Herein, the recoverable material includes the fibre material, the SMA and/or SMI and/or polystyrene, and the filler.

The preferred method for recycling the fibre composite material is further described in the third aspect of the present invention.

In a preferred embodiment according to the first aspect of the present invention, in step (a) preferably at least 10 wt% SMA and/or SMI is dissolved in styrene, optionally in the presence of maleic anhydride, more preferably at least 20 wt%, even more preferably at least 25 wt%, wherein the wt% is relative to the total mass of the liquid resin comprising SMA and/or SMI. Preferably, at most 50 wt% SMA and/or SMI is dissolved in styrene, optionally in the presence of maleic anhydride, more preferably at most 45 wt% and even more preferably at most 35 wt%, wherein the wt% is relative to the total mass of the liquid resin comprising SMA and/or SMI.

Most preferably, the liquid resin comprising SMA and/or SMI consists of SMA and/or SMI and styrene, and optionally maleic anhydride. Thus, the reactive solvent most preferably consists of styrene, and optionally maleic anhydride.

In one embodiment, in step (a), at least 10 wt% SMA and/or SMI is dissolved in at most 90 wt% reactive solvent. Preferably, at least 20 wt% SMA and/or SMI is dissolved in at most 80 wt% reactive solvent, more preferably at least 25 wt% SMA and/or SMI is dissolved in at most 75 wt% reactive solvent, wherein the wt% is relative to the total mass of the liquid resin comprising SMA and/or SMI. Preferably, at most 50 wt% SMA and/or SMI is dissolved in at least 50 wt% reactive solvent, more preferably at most 45 wt% SMA and/or SMI is dissolved in at least 55 wt% reactive solvent, and even more preferably at most 35 wt% SMA and/or SMI is dissolved in at least 65 wt% reactive solvent, wherein the wt% is relative to the total mass of the liquid resin comprising SMA and/or SMI.

In one embodiment, the reactive solvent consists of styrene. In another embodiment, the reactive solvent consists of styrene and maleic anhydride. Preferably, the reactive solvent consists of at most 95 wt% styrene and 5 wt% maleic anhydride, relative to the total weight of the reactive solvent. More preferably the reactive solvent consists of at most 90 wt% styrene and 10 wt% maleic anhydride, even more preferably the reactive solvent consists of at most 85 wt% styrene and 15 wt% maleic anhydride, and even more preferably the reactive solvent consists of at most 80 wt% styrene and 20 wt% maleic anhydride.

The present inventors have unexpectedly found that if the content of maleic anhydride in the reactive solvent is in the preferred range, the viscosity of the liquid resin comprising SMA and/or SMI can be lowered ensuring efficient impregnation of the fibre material during the resin transfer step. A liquid resin with a lower viscosity can therefore move even better into the inter-fibre space. Consequently, during impregnation the SMA and/or SMI content in the liquid resin can be kept relatively high, the impregnation process is fast and efficient, and relatively complex shapes in the moulds can be assumed. Moreover, if the content of maleic anhydride in the reactive solvent is in the preferred range, a composite with a particularly high thermomechanical resistance can be obtained.

Preferably, the viscosity of the liquid resin comprising SMA and/or SMI is at most 10,000 mPa.s, more preferably at most 9,000 mPa.s, more preferably at most 8,000 mPa.s, more preferably at most 7,000 mPa.s, more preferably at most 6,000 mPa.s, more preferably at most 5,000 mPa.s, more preferably at most 4,000 mPa.s, more preferably at most 3,000 mPa.s, more preferably at most 2,000 mPa.s, more preferably at most 1,000 mPa.s, more preferably at most 800 mPa.s, more preferably at most 600 mPa.s, more preferably at most 400 mPa.s, and even more preferably at most 200 mPa.s.

The dynamic viscosity is preferably measured using a rotational viscosimeter at 100 rpm.

In preferred embodiment according to the first aspect of the present invention, the SMA and/or SMI has a weight average molecular weight of at least 5,000 g/mol.

The weight average molecular weight may be measured according to using gel permeation chromatography (GPC) using narrow molecular weight polystyrene standards, preferably with a dispersity of less than 1.1, THF as a solvent and a UV or diode array detector with a typical detection wavelength of 254 nm.

Preferably, the weight average molecular weight of the SMA and/or SMI is at least 10,000 g/mol, more preferably at least 20,000 g/mol, more preferably 30,000 g/mol, more preferably at least 40,000 g/mol, more preferably 50,000 g/mol, more preferably at least 60,000 g/mol, more preferably 70,000 g/mol, more preferably at least 80,000 g/mol, more preferably 90,000 g/mol, and even more preferably at least 100,000 g/mol.

In a preferred embodiment according to the first aspect of the present invention, the SMA and/or SMI has a maleic anhydride and/or maleic imide content of the SMA and/or SMI is at least 5 wt% based on the total weight of the SMA and/or SMI.

Preferably, the maleic anhydride and/or maleic imide content is at least 10 wt%, more preferably at least 15 wt %, and even more preferably at least 20 wt%. In a particularly preferred embodiment, the maleic anhydride and/or maleic imide content is 23 wt%.

When the SMA and/or SMI has a maleic anhydride and/or maleic imide content of at least 5 wt%, the Tg of the fibre composite material can be kept relatively high thereby ensuring a high thermomechanical resistance. Particularly high Tg can be achieved when the maleic anhydride and/or maleic imide content is 23 wt%. Moreover, it is submitted that when the maleic anhydride and/or maleic imide content of the dissolved SMA and/or SMI is at least 5 wt%, the adhesion between the fibres and the polymer is particularly strong. Glass transition temperatures may be determined using differential scanning calorimetry (DSC) with a heating and cooling rate of 20 °C/min.

In a preferred embodiment according to the first aspect of the present invention, the step (b) further comprises adding a curing agent, optionally said curing agent including any of organic peroxides, such as diacyl peroxides, peroxy esters, dialkyl peroxides, peroxyacetals, or azo compounds, or any combination thereof, preferably said curing agent including azobisisobutyronitrile (AIBN), benzoyl peroxide, and/or methyl ethyl ketone peroxide (MEKP).

Preferably, the fibre composite material does not comprise pMMA.

### Method for preparing fibre composite material

In a second aspect, the present invention relates to a method for preparing a fibre composite material, said fibre composite material comprising
- a styrene-maleic anhydride copolymer (SMA) and/or at least partially imidized SMA copolymer (SMI), and
- fibre material,
the method comprising a liquid composite moulding technique, comprising the steps of:
(a) dissolving SMA and/or SMI in styrene, optionally in the presence of maleic anhydride, to obtain a liquid resin comprising SMA and/or SMI,
(b) transferring the liquid resin comprising SMA and/or SMI into a mould containing the fibre material, and
(c) curing the liquid resin to obtain the fibre composite material.

The definitions of terms from the first aspect apply *mutatis mutandis* to the second aspect. The steps of the second aspect are preferably the steps of the first aspect.

The liquid resin comprising SMA and/or SMI has a high boiling point of around 145 °C, which enables higher reactivity and curing rates at elevated processing temperatures. The process for preparing the fibre composite materials is therefore efficient and cost effective. Moreover, as discussed above, through the infusion preparation process of the present application, consistent mixing between continuous fibres and the polymer can be achieved since the liquid resin can efficiently impregnate the continuous fibres and move into inter-fibre space. The method according to the second aspect of the present invention therefore also does not require high temperatures and pressures. Similarly, further reductions in the viscosity, e.g. by having a maleic anhydride content in the reactive solvent in the preferred range, result in even more energy efficient infusion processes.

Typically, the step (b) further comprises a step of adding a curing agent, optionally said curing agent including any of organic peroxides, such as diacyl peroxides, peroxy esters, dialkyl peroxides, peroxyacetals, or azo compounds, or any combination thereof, preferably said curing agent including azobisisobutyronitrile (AIBN), benzoyl peroxide, and/or methyl ethyl ketone peroxide (MEKP).

In a preferred embodiment according to the second aspect of the present invention, the curing of step (c) is carried out at 50 °C or more, or at room temperature in combination with a suitable accelerator.

The accelerator may be added in addition to the curing agent in step (b). Suitable accelerators include but are not limited to cobalt(2+) bis(2-ethyl-2,5-dimethylhexanoate) for MEKP, or dimethylaniline for benzoyl peroxide.

In one embodiment, the step (c) further includes a step of consolidating the fibre composite material, said consolidation comprising a further manufacturing processing step, selected from any of stamp forming, thermoforming, compression moulding, vacuum assisted moulding, press consolidation, automated fibre and tape placement, automated fibre and tape winding, autoclave consolidation, 3D printing, and/or layering to form a laminate.

### Method of recycling the fibre composite material

In a third aspect, the present invention relates to a method of recycling the fibre composite material according to the first aspect, the method comprising the steps of
(i) contacting the fibre composite material with a solvent selected from any of acetone, methyl ethyl ketone, tetrahydrofuran, cyclohexanone, dimethylformamide (DMF), dimethylsulfoxide (DMSO), N-methyl pyrrolidone (NMP), dichloromethane (DCM), chloroform, toluene, ethyl benzene, ethyl acetate, or combinations thereof.
(ii) filtering out the fibre material, and
(iii) drying the filtrate to recover dissolved SMA and/or SMI and polystyrene.

The definitions of terms from the first aspect apply *mutatis mutandis* to the third aspect.

Dissolving the matrix of the fibre composite material may further be effected through any of heating, mixing, ultrasonic cavitation, or the addition of further solvation aids, such as detergents.

Through the method of recycling outlined above, both the continuous fibre material and the SMA and/or SMI can be recovered. Preferably, at least 60 wt% of the material are recoverable, more preferably at least 70 wt%, more preferably at least 80 wt%, more preferably at least 90 wt%, and even more preferably at least 95 wt%.

Recoverable material includes the fibre material, the SMA and/or SMI and/or polystyrene, and the filler. Recovered fibre material may be re-used in a similar process, such as making new fibre composite materials. Similarly, recovered SMA and/or SMI and polystyrene may be re-used.

### Method of processing the fibre composite material

In a fourth aspect, the present invention relates to a method of processing the fibre composite material according to the first aspect, wherein the processing includes any of stamp forming, thermoforming, compression moulding, vacuum assisted moulding, press consolidation, automated fibre and tape placement, automated fibre and tape winding, autoclave consolidation, and/or layering to form a laminate.

The present invention also relates to an object obtainable by said method.

The definitions of terms from the first aspect apply *mutatis mutandis* to the fourth aspect.

### Use of the fibre composite material

In fifth aspect, the present invention relates to a use of the fibre composite material according to the first aspect in an article, preferably said article being any of electronics equipment, aerospace materials, wind turbines, casings, marine structures, pipe and tank, construction structures, transportation, defence materials, consumer goods, circuit boards, battery casings, pressurized tanks, and/or structural profiles used in construction industry.

The definitions of terms from the first aspect apply *mutatis mutandis* to the fifth aspect.

The present disclosure also relates to an article comprising the fibre composite material according to the first aspect, preferably said article being any of electronics equipment, aerospace materials, wind turbines, casings, marine structures, pipe and tank, construction structures, transportation, defence materials, consumer goods, circuit boards, battery casings, pressurized tanks, and/or structural profiles used in construction industry.

Based on the foregoing discussion, the following examples, and without wishing to be bound by theory, the inventors submit that they have provided a fibre composite material which has high thermomechanical resistance and strong mechanical properties which is simultaneously recyclable.

### Examples

The present invention is exemplified by the following, non-limiting examples.

The following methods of characterisation were used throughout the examples: The weight average molecular weight may be measured according to using gel permeation chromatography (GPC) using narrow molecular weight polystyrene standards, THF as a solvent and a UV or diode array detector with a typical detection wavelength of 254 nm. The dynamic viscosities were determined using a rotational viscometer at 100 rpm from Brookfield. Glass transition temperatures were determined using differential scanning calorimetry (DSC) with a heating and cooling rate of 20 °C/min. The reported glass transition temperature (Tg) was obtained from the second heating cycle from the half height midpoint. The total glass fibre content in the composite was determined using thermogravimetric analysis as the residual mass at 800 °C. The flexural strength, flexural modulus and flexural strain at failure were determined according to ISO 14125.

### Example A: Preparation and characterisation of the infusion syrup.

Multiple infusion syrups were prepared by dissolving SMA (MA content 23 wt%, Mw = 115, 000 g/mol) in styrene with/without maleic anhydride. See Table 1 for the respective quantities. To aid the dissolution, the syrups were shaken using a standard laboratory shaker for 24 hours at room temperature (23 °C). The dynamic viscosities were determined using a rotational viscometer at 100 rpm.

**Table 1: Composition of the different infusion syrups; "Outside of the measuring range.**

| Styrene (wt%) | MA (wt%) | SMA wt(%) | Viscosity (mPa.s) |
|---|---|---|---|
| 80,0% | 0,0% | 20,0% | 544 |
| 70,0% | 0,0% | 30,0% | 6880 |
| 60,0% | 0,0% | 40,0% | > 10 000^{a} |
| 75,0% | 5,0% | 20,0% | 246 |
| 65,0% | 5,0% | 30,0% | 1720 |
| 55,0% | 5,0% | 40,0% | > 10 000^{a} |
| 70,0% | 10,0% | 20,0% | 166 |
| 60,0% | 10,0% | 30,0% | 1170 |
| 50,0% | 10,0% | 40,0% | 9940 |

The data of Table 1 show that increasing the MA content decreases the viscosity of the infusion syrup.

### Example B: Preparation of a composite using the infusion syrup.

To the syrup prepared in Example A (75 wt% styrene, 20 wt% SMA, and 5 wt% MA) 0.3 wt% of the initiator (azobisisobutyronitrile, AIBN) was added. The syrup was shaken for 30 minutes to completely solubilise the initiator. Next, the syrup was degassed by applying a vacuum (~ 100 mbar) for 10 minutes. This syrup was then infused into the fabric (four layers of unidirectional glass fibre fabric from Metyx, product name: L600E10C-0) to prepare the composite using a standard vacuum infusion process using a vacuum pressure of 15 mBar. The infused fabric was then placed into an oven for at least 24h at 65 °C. After removal of the vacuum bag and peel ply the composite material was obtained.

**Table 2**

| | |
|---|---|
| Flexural strength (ISO 14125) | 818 MPa |
| Flexural modulus (ISO 14125) | 26.5 GPa |
| Flexural strain at failure (ISO 14125) | 3.55 % |
| Glass transition temperature (1)^{a} | 105.8 °C |
| Glass transition temperature (2)^{b} | 160.0 °C |
| Glass fibre content | 69.1 wt% |

| | |
|---|---|
| a. Tg (1) is considered to be dominated by polystyrene; b. Tg (2) is considered to be dominated by SMA | |

The material was compared with an epoxy fibre composite material prepared using an industry standard epoxy infusion resin (IN 2 Epoxy infusion resin, Easycomposites, 2023). The resin was mixed with the accompanying hardener according to the instructions and briefly degassed by applying a vacuum (~ 100 mbar) for 2 minutes. This syrup was then infused into the fabric (four layers of unidirectional glass fibre fabric from Metyx, product name: L600E10C-0) to prepare the composite using a standard vacuum infusion process and a vacuum pressure of 15 mBar. The material was cured for 24h at room temperature. After removal of the vacuum bag and peel ply the composite material was obtained.

| | |
|---|---|
| Flexural strength (MPa) | 796 |
| Flexural modulus (GPa) | 23.7 |
| Flexural strain at failure (%) | 4.1 |
| Glass fibre content | 74.4 wt% |

The inventive material was shown to be slightly stronger despite having a lower reinforcing glass content.

### Example C: Recycling of the composite from example B

A piece of the composite was weighed and was submerged in acetone for 24h in a sealed sample container, which was agitated using a laboratory shaker. Afterwards, the glass fibres were separated from the solution containing the polymers by filtration. After evaporation, the polymer mixture was isolated (19.9 wt% compared to the mass of the composite, indicating that 64 wt% of the polymer is recyclable).

## Claims

1. A fibre composite material comprising
- a styrene-maleic anhydride copolymer (SMA) and/or at least partially imidized SMA copolymer (SMI), and
- fibre material,
wherein the fibre composite material is obtainable by a liquid composite moulding technique, comprising the steps of:
(a) dissolving SMA and/or SMI in styrene, optionally in the presence of maleic anhydride, to obtain a liquid resin comprising SMA and/or SMI,
(b) transferring the liquid resin comprising SMA and/or SMI into a mould containing the fibre material, and
(c) curing the liquid resin to obtain the fibre composite material.

2. The fibre composite material according to claim 1, wherein the fibre material is a continuous and/or discontinuous fibre material, and the fibre material is any of a glass fibre material, carbon fibre material, aramid fibre material, basalt fibre material and/or natural fibre material in the form fabrics, such as non-woven, woven, unidirectional, continuous filament mat, chopped strand mat, and direct rovings.

3. The fibre composite material according to any of claims 1 or 2, wherein the fibre material is a continuous fibre material.

4. The fibre composite material according to any of claims 1-3, wherein the fibre composite material comprises at least 20 wt% fibre material relative to the total weight of the composite, preferably at least 40 wt%, and even more preferably at least 55 wt%; and at most 99 wt% fibre material relative to the total weight of the composite, preferably at most 90 wt%, and even more preferably at most 80 wt%.

5. The fibre composite material according to any of claims 1-4, wherein the fibre composite material further comprises an additive selected from any of a flame retardant additive, a UV stabiliser, a filler, an antioxidant, a mould release agent, a pigment, or any combination thereof.

6. The fibre composite material according to any of claims 1-5, wherein the fibre composite material is recyclable, optionally wherein at least 60 wt% of the material are recoverable according to the method for recycling disclosed in the description, preferably at least 70 wt%, more preferably at least 80 wt%, more preferably at least 90 wt%, and even more preferably at least 95 wt%.

7. The fibre composite material according to any of claims 1-6, wherein in step (a) at least 10 wt% SMA and/or SMI is dissolved in styrene, optionally in the presence of maleic anhydride, wherein the wt% is relative to the total mass of the liquid resin comprising SMA and/or SMI.

8. The fibre composite material according to any of claims 1-7, wherein the dissolved SMA and/or SMI has
• a weight average molecular weight of at least 5,000 g/mol, wherein the weight average molecular weight is determined as described in the description; and/or
• a maleic anhydride and/or maleic imide content of at least 5 wt% based on the total weight of the dissolved SMA and/or SMI.

9. The fibre composite material according to any of claims 1-8, wherein the step (b) further comprises adding a curing agent, optionally said curing agent including any of organic peroxides, such as diacyl peroxides, peroxy esters, dialkyl peroxides, peroxyacetals, or azo compounds, or any combination thereof, preferably said curing agent including azobisisobutyronitrile (AIBN), benzoyl peroxide, and/or methyl ethyl ketone peroxide (MEKP) .

10. A method for preparing a fibre composite material, said fibre composite material comprising
- a styrene-maleic anhydride copolymer (SMA) and/or at least partially imidized SMA copolymer (SMI), and
- fibre material,
the method comprising a liquid composite moulding technique, comprising the steps of:
(a) dissolving SMA and/or SMI in styrene, optionally in the presence of maleic anhydride, to obtain a liquid resin comprising SMA and/or SMI,
(b) transferring the liquid resin comprising SMA and/or SMI into a mould containing the fibre material, and
(c) curing the liquid resin to obtain the fibre composite material.

11. The method for preparing a fibre composite material according to claim 10, wherein the curing of step (c) is carried out at 50 °C or more, or at room temperature in combination with a suitable accelerator.

12. A method of recycling the fibre composite material of any of claims 1-9, the method comprising the steps of
(i) contacting the fibre composite material with a solvent selected from any of acetone, methyl ethyl ketone, tetrahydrofuran, cyclohexanone, dimethylformamide (DMF), dimethylsulfoxide (DMSO), N-methyl pyrrolidone (NMP), dichloromethane (DCM), chloroform, toluene, ethyl benzene, ethyl acetate, or combinations thereof,
(ii) filtering out the fibre material, and
(iii) drying the filtrate to recover dissolved SMA and/or SMI and/or polystyrene.

13. A method of processing the fibre composite material according to any of claims 1-9, wherein the processing includes any of stamp forming, thermoforming, compression moulding, vacuum assisted moulding, press consolidation, automated fibre and tape placement, automated fibre and tape winding, autoclave consolidation, and/or layering to form a laminate.

14. Object obtainable by the method of claim 13.

15. Use of the fibre composite material according to any of claims 1-9 in an article, preferably said article being any of electronics equipment, aerospace materials, wind turbines, casings, marine structures, pipe and tank, construction structures, transportation, defence materials, consumer goods, circuit boards, battery casings, pressurized tanks, and/or structural profiles used in construction industry.

16. Article comprising the fibre composite material according to any of claims 1-9, preferably said article being any of electronics equipment, aerospace materials, wind turbines, casings, marine structures, pipe and tank, construction structures, transportation, defence materials, consumer goods, circuit boards, battery casings, pressurized tanks, and/or structural profiles used in construction industry.
